# EUROPEAN PATENT SPECIFICATION

(11) **EP 2 803 887 B1**
(45) Date of publication and mention of the grant of the patent: **21.11.2018**
(21) Application number: 12864726.0
(22) Date of filing: 20.12.2012
(51) Int. Cl.: F16K 31/06, F16K 47/02

(54) **SOLENOID VALVE**
MAGNETVENTIL
SOUPAPE À SOLENOÏDE

(30) Priority: 12.01.2012 JP 2012004522
(43) Date of publication of application: 19.11.2014
(73) Proprietor: Eagle Industry Co., Ltd., Minato-ku Tokyo 105-8587 (JP)
(72) Inventor: FUTAKUCHI Masayuki, Tokyo 105-8587 (JP); HAYAMA Masahiro, Tokyo 105-8587 (JP); FUKUDOME Kohei, Tokyo 105-8587 (JP)
(74) Representative: WSL Patentanwälte Partnerschaft mbB
(86) International application number: PCT/JP2012/083074
(87) International publication number: WO 2013/105411

(56) References cited:
- EP-A1- 1 876 380
- EP-A1- 2 351 953
- DE-B- 1 025 693
- GB-A- 2 021 240
- JP-A- 2001 146 941
- JP-A- 2004 116 616
- JP-A- 2008 039 157
- JP-A- 2008 121 721
- JP-A- 2010 121 706
- JP-U- S6 157 282

## Description

### {TECHNICAL FIELD}

The present invention relates to a solenoid valve for variable control of the pressure or volume of a working fluid, and in particular relates to a solenoid valve employed as a volume control valve for controlling the discharge amount in response to the pressure load, in a variable volume compressor employed in the air conditioning system of an automobile or the like; or employed in an automotive transmission, and the like.

### {BACKGROUND ART}

A swash type variable volume compressor employed, for example, in the air conditioning system of an automobile or the like is equipped with parts such as a rotating shaft, the rotation of which is driven by the rotational force of the engine; a swash plate linked to the rotating shaft in a manner such that the incline angle with respect thereto is variable; and a piston for compression, linked to the swash plate. Changing the incline angle of the swash plate changes the stroke of the piston, controlling the discharged amount of refrigerant gas.

The swash plate is designed such that the incline angle thereof may change in continuous fashion, while utilizing the intake pressure Ps of the intake chamber that intakes the refrigerant gas, the discharge pressure Pd of the discharge chamber that discharges the refrigerant gas compressed by the piston, and the control chamber pressure Pc of the control chamber (crank chamber) housing the swash plate, by employing a volume control valve, the opening and closing of which is driven by electromagnetic force, to appropriately control the pressure inside the control chamber, and adjust the balance of pressure acting on both surfaces of the piston.

This type of volume control valve is furnished with a valve seat and a valve body in the passage connecting the discharge chamber and the crank chamber of the swash type variable volume compressor, and the aperture of the passage between the valve seat and the valve body is varied through pulse width modulation (PWM) control. For example, a larger opening of the passage through PWM control during vehicle acceleration allows the high-pressure refrigerant gas inside the discharge chamber to be readily supplied to the crank chamber, so the discharge capacity becomes smaller. Conversely, a smaller opening of the passage through PWM control with the vehicle at constant speed makes it difficult for the high-pressure refrigerant gas inside the discharge chamber to be supplied to the crank chamber, so the discharge capacity becomes greater. In this fashion, in a variable volume compressor, the discharge volume may be varied, as appropriate, according to the vehicle speed and the like. In the process, the swash type variable volume compressor may experience large oscillations in the input signal for PWM control, or in a PWM current of a given specific frequency (for example, 400-500 Hz).

For this reason, when the passage opening is small, due to the small relative distance between the valve seat and the valve body, the valve seat and the valve body collide repeatedly innumerable times, generating noise that on rare occasions can be heard inside and outside the vehicle. Subsequent to collisions, the opening becomes larger due to rebound of the valve seat and the valve body, and therefore the opening may become unstable in some cases.

It is known in the past to stabilize the aperture of the passage by providing, between the valve seat and the valve body, a damping member for suppressing rebound of the valve seat and the valve body, which is generated by collisions of the valve seat and the valve body when the aperture of the passage is small (see Patent Document 1, for example).

Moreover, it is known to provide a resonance suppression member comprising a leaf spring, for imparting sliding resistance to the oscillating valve body in the direction of opening and closing thereof, in order to suppress resonance due to bouncing of the valve body (see Patent Document 2, for example).

It is further known to fit together the valve body and the transmission member that transmits the urging force of the solenoid to the valve body, doing so with an extremely small clearance therebetween in the radial direction, so that {the components} move in close contact to one another with the gas refrigerant therebetween, in order to suppress resonance of the valve body in proximity to the valve seat (see Patent Document 3, for example).

European patent application EP 2 351 953 A1 relates to a contaminant sealing device comprising an annular packing for reciprocating movement or rotation, the packing being mounted to one of two members that face each other and being disposed in slidably intimate contact against another of the two members. The cross-sectional shape of the annular packing is a substantial Y shape, the back portion of the substantial Y shape is disposed so as to face a high pressure side, and a high-pressure fluid acts on a space formed by the back portion of the substantial Y shape and the two members that face each other.

German patent DE 1025693 B relates to an electromagnetically controlled three-way valve with pressure relief means.

UK Patent application GB 2 021 240 relates to a solenoid valve. The solenoid valve comprises an armature which acts via a push-rod arrangement on a valve closure-member. The push-rod arrangement is sealed to a housing by a diaphragm which separates an intermediate pressure chamber from the
electromagnet winding. The push-rod passes with clearance through an opening in the housing wall separating a high-pressure chamber from the intermediate pressure chamber, wherein the latter is connected to a low-pressure chamber.

European patent application EP 1 876 380 relates to a selector valve, comprising a valve chamber having a first valve seat and a second valve seat facing the first valve seat, a first fluid passage communicating with a first valve port on the periphery of the first valve seat of the valve chamber to flow a first working fluid therein, a second fluid passage communicating with the valve chamber to flow the working fluid therefrom or therein, a third fluid passage communicating with a second valve port on the periphery of the second valve seat of the valve chamber to flow the working fluid therefrom, a valve element disposed in the valve chamber and alternately separating from and coming into contact with the first valve seat and the second valve seat, a stem part connected to the valve element, a guide hole movably guiding the valve stem, a storage chamber for a seal means installed around the guide hole, an auxiliary passage allowing the storage chamber to communicate with the first fluid passage, and a solenoid part connected to the stem part for operating a solenoid rod. A first pressure receiving area formed by the first valve seat and the valve element joined to each other to receive the pressure of the first working fluid is set approximately the same as the third pressure receiving area of
the stem part receiving the first working fluid in the storage chamber.

### {CITATION LIST}

### {Prior Art Document}

### {Patent Document}

Patent Document 1: Japanese Laid-Open Patent Application 2011-149377
Patent Document 2: Japanese Laid-Open Patent Application 2005-171908
Patent Document 3: Japanese Laid-Open Patent Application 2005-120849
Patent Document 4: European Patent Application EP 2 351 953
Patent Document 5: German Patent DE 1025693
Patent Document 6: UK Patent Application GB 2 021 240
Patent Document 7: European Patent Application EP 1 876 380.

### {SUMMERY OF INVENTION}

### {TECHNICAL PROBLEM}

However, the aforedescribed first background art is constituted such that the damping member comprises a disk-shaped vibration-isolating alloy, this disk-shaped vibration-isolating alloy being pressed against the valve seat by a coil
spring, and therefore a coil spring is required in addition to the vibration-isolating alloy; moreover, space in which to
dispose the coil spring is necessary, thereby creating the problem of a more complex and larger device.

While it is possible for the aforedescribed second background art to be implemented in a volume control valve of a design in which a ball-shaped valve body is disposed on the side where the port receives the discharge pressure Pd, and the valve body is urged by a spring towards the direction of seating thereof into the valve seat, difficulty of implementation in volume control valves of other designs is a problem.

Furthermore, while it is possible for the aforedescribed third background art to be implemented in a volume control valve of a design in which the urging force of the solenoid is transmitted exclusively in the direction of opening the valve body, difficulty of implementation in volume control valves of other designs is a problem.

The present invention is intended to solve the problems encountered in the aforedescribed background art, it being an object thereof to provide a solenoid valve which, by imparting friction to the outside periphery of a reciprocating member that is directly driven in the axial direction through driving of the solenoid, prevents noise occurring due to repeated collisions of the valve seat and the valve body occurring at times that the aperture of the passage is small, and affords a stable aperture of the passage.

### {SOLUTION TO PROBLEM}

In order to achieve the aforedescribed object, the solenoid valve of the present invention resides in a solenoid valve for varying the aperture of a passage between a valve seat and a valve body by a PWM-controlled solenoid, and varying the volume or pressure of a working fluid, wherein a friction member for contacting the outside periphery of a reciprocating member directly driven through driving by the said solenoid is furnished to a stationary-side member in an area surrounding said reciprocating member characterized in that said friction member is constituted by a rubber ring formed from a rubber material and furnished with a plurality of protrusions on the inside diameter side of said rubber ring in the circumferential direction, said rubber ring contacting the outside periphery of said reciprocating member exclusively at the protrusions, or in that said friction member is constituted by a synthetic resin ring formed from a synthetic resin material, wherein
said synthetic resin ring being substantially "C" shaped in cross-section, and furnished with inside diameter-side ring portions and a plurality of notched portions on the inside diameter side of the synthetic resin ring in the circumferential direction, the synthetic resin ring contacting the outside periphery of said reciprocating member at the inside diameter-side ring portions.

Accordingly there can be provided a solenoid valve that, in spite of minute oscillations of the solenoid valve due to the input signal for PWM control, prevents noise from occurring due to repeated collisions of the valve seat and the valve body occurring at times that the aperture of the passage is small, and affords stable opening of the passage.

Naturally, the reciprocating member directly driven through driving by the solenoid includes a drive rod initially driven by the solenoid; and a member integrally linked to this drive rod, for example, a valve body or the like.

The present invention in a second aspect resides in a solenoid valve according to the first aspect, characterized in that the reciprocating member directly driven through driving by the solenoid and disposed contacting the friction member is the drive rod of the solenoid; and the stationary-side member is the stator core.

According to this aspect, the friction member can be furnished within the stator core, and the device can be more compact. Moreover, because the diameter of the drive rod is normally not very large, an appropriate degree of friction can be imparted.

The present invention in a third aspect resides in a solenoid valve according to the first aspect, characterized in that the reciprocating member directly driven through driving by the solenoid, and disposed contacting the friction member, is the valve body; and the stationary-side member is a valve housing.

According to this aspect, intrinsic friction can be imparted to the valve body which repeatedly collides against the valve seat, whereby noise can be effectively prevented, and stable opening of the passage can be achieved.

The present invention in a fourth aspect resides in a solenoid valve according to any of the first to third aspects, characterized in that the friction member is constituted by a rubber ring formed from a rubber material.

According to this aspect, because rubber materials are less affected than other thermoplastic materials by dimensional change due to temperature changes, and have low hardness, even if the surrounding temperature changes, fluctuation of the clamping force with respect to the valve body or drive rod constituting the reciprocating member is minimal. Moreover, the ring is readily formed.

The present invention in a fifth aspect resides in a solenoid valve according to the fourth aspect, characterized in that a plurality of protrusions are furnished to the inside diameter side of the rubber ring.

According to this aspect, excessively high friction with respect to the valve body or the drive rod constituting the reciprocating member can be prevented. Moreover, as only the protrusions of the friction member contact the outside peripheral surface of the drive rod, no pressure differential is generated between the pressure-sensitive body side and the moveable core side of the friction member, and situations in which high levels of back pressure build up at the moveable core side can be prevented.

The present invention in a sixth aspect resides in a solenoid valve according to the fifth aspect, characterized in that locations where the protrusions are furnished on the rubber ring are thin-walled portions from which sections at the outside diameter side have been shaved.

According to this aspect, an increase in friction is prevented, even in cases in which the rubber ring has become swelled by liquid refrigerant, so that a suitable level of friction can be obtained.

The present invention in a seventh aspect resides in a solenoid valve according to any of the first to third aspects, characterized in that the friction member is constituted by a synthetic resin ring formed from a synthetic resin material, of substantially "C" shaped cross section.

According to this aspect, the effects of dimensional change due to temperature changes can be further ameliorated by adopting a cross sectional shape that is substantially "C" shaped, and fluctuation of the clamping force with respect to the valve body or drive rod constituting the reciprocating member can be suppressed.

The present invention in an eighth aspect resides in a solenoid valve according to the seventh aspect, characterized in that inside diameter-side ring portions, which of the friction member constituted by the synthetic resin ring of substantially "C" shaped cross section, are portions thereof for contacting the reciprocating member, are formed in a shape having a plurality of notched portions in the circumferential direction.

According to this aspect, excessively high friction on the valve body or drive rod constituting the reciprocating member is prevented.

The present invention in a ninth aspect resides in a solenoid valve according to the seventh or eighth aspect, characterized in that a ring-shaped groove opening towards a side opposite the substantially "C" shaped opening side is formed in an outside-diameter-side ring portion of the friction member constituted by the synthetic resin ring of substantially-"C"-shaped cross section.

According to this aspect, the effects of dimensional change by the flange portion of the ring of cross sectional shape that is substantially "C" shaped can be prevented.

The present invention in a tenth aspect resides in a solenoid valve according to any of the fourth to ninth aspects, characterized in that the friction member is secured with both side surfaces thereof wedged into a recessed portion formed on the inside surface of the stationary-side member.

According to this aspect, deflection of the rubber ring is suppressed, and friction can be readily imparted to the valve body or drive rod constituting the reciprocating member.

The present invention in an eleventh aspect resides in a solenoid valve according to any of the fourth to ninth aspects, characterized in that a backup ring is furnished at one side of a recessed portion formed on the inside surface of the stationary-side member, and the friction member is secured by being pressed against the other side of the recessed portion by the backup ring.

According to this aspect, deflection of the rubber ring is suppressed, and friction can be readily imparted to the valve body or drive rod constituting the reciprocating member. Moreover, the rubber ring is readily installed.

### {BRIEF DESCRIPTION OF DRAWINGS}

FIG. 1 is a cross sectional view showing a variable volume compressor in which the volume control valve according to a first and second embodiment of the present invention has been installed;
FIG. 2 is a cross sectional view showing the volume control valve according to the first embodiment of the present invention;
FIG. 3 is a perspective view showing a first example of the friction member installed in the volume control valve according to the first and second embodiment of the present invention;
FIG. 4 is a fragmentary sectional view showing an example of a mode for installation of the friction member shown in FIG. 3;
FIG. 5 is a fragmentary sectional view showing another example of a mode for installation of the friction member shown in FIG. 3;
FIG. 6 is a front view showing a second example of the friction member installed in the volume control valve according to the first and second embodiment of the present invention;
FIG. 7 is a view of section A-A in FIG. 6; and
FIG. 8 is a longitudinal sectional view showing the volume control valve according to the second embodiment of the present invention.

### {DESCRIPTION OF EMBODIMENTS}

The preferred mode for carrying out the solenoid valve according to the present invention is described in detail below, taking the example of a volume control valve. However, the present invention should not be construed as being limited thereto; various alterations, modifications, and improvements based on the technical knowledge of a person skilled in the art would be possible without departing from the scope of the invention.

### {Embodiments}

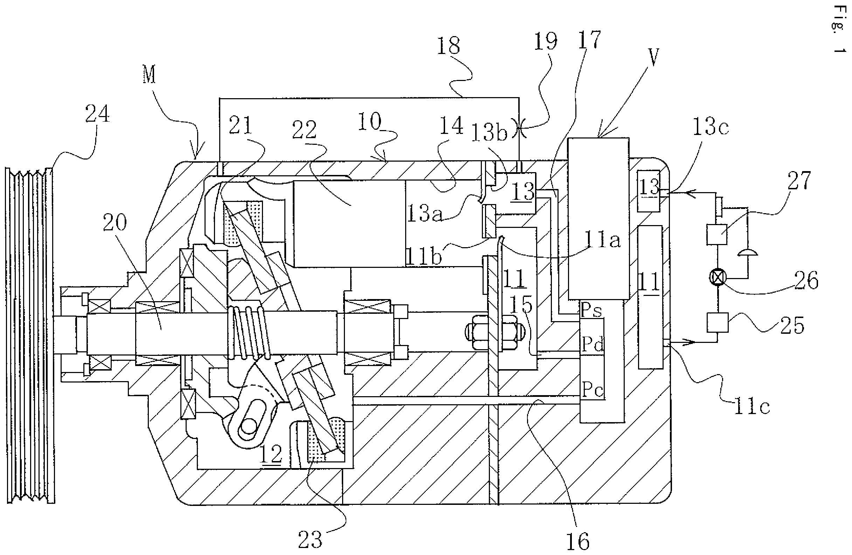

FIG. 1 is a cross sectional view showing a variable volume compressor in which the volume control valve according to a first and second embodiment of the present invention has been installed.

The variable volume compressor M is equipped with a discharge chamber 11; a control chamber (also called a crank chamber) 12; an intake chamber 13; a plurality of cylinders 14; a port 11b opened and closed by a discharge valve 11a, for communication of the cylinders 14 and the discharge chamber 11; a port 13b opened and closed by an intake valve 13a, for communication of the cylinders 14 and the intake chamber 13; a discharge port 11c and an intake port 13c connected to an external cooling circuit; a communicating passage 15 serving as a discharge-side passage for communication of the discharge chamber 11 and the control chamber 12; a communicating passage 16 that both functions as the aforementioned discharge-side passage and functions as an intake-side passage for communication of the control chamber 12 and the intake chamber 13; a casing 10 for defining a communicating passage 17 as an intake-side passage; a rotating shaft 20 rotatably furnished within the control chamber (crank chamber) 12 and projecting to the outside therefrom; a swash plate 21 for rotating in unison with the rotating shaft 20, and linked thereto such that the incline angle with respect to the rotating shaft 20 is variable; a plurality of pistons 22 fitting in reciprocating fashion within the respective cylinders 14; a plurality of linking members 23 for linking the swash plate 21 and the respective pistons 22; a driven pulley 24 attached to the rotating shaft 20; and the volume control valve V of the present invention, assembled into the casing 10.

The variable volume compressor M is moreover furnished with a communicating passage 18 for direct communication of the control chamber (crank chamber) 12 and the intake chamber 13. A stationary orifice 19 is furnished to the communicating passage 18.

Furthermore, a cooling circuit is connected to the discharge port 11c and the intake port 13c of the variable volume compressor M, this cooling circuit being furnished with a condenser 25, an expansion valve 26, and an evaporator 27, arrayed in succession.

### {First embodiment}

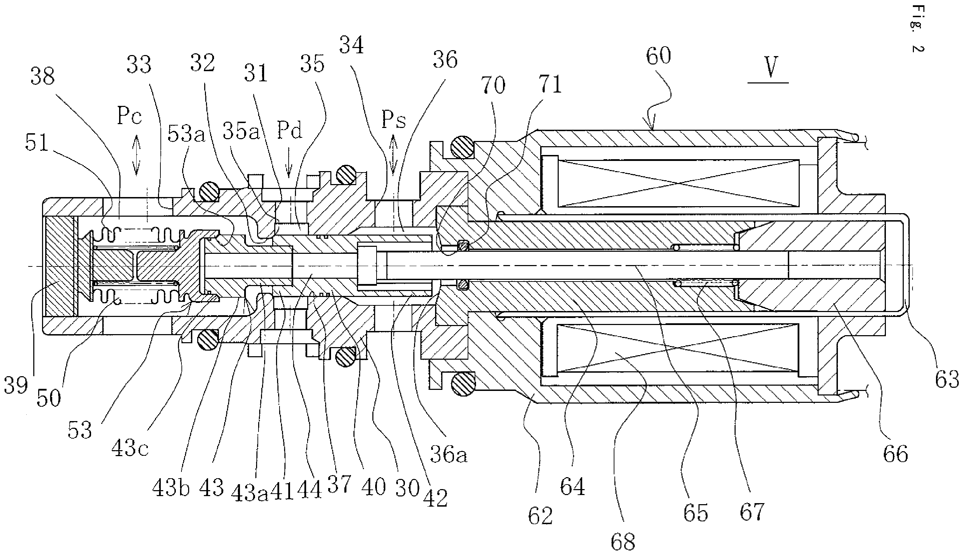

FIG. 2 is a cross sectional view showing the volume control valve according to the first embodiment of the present invention.

The volume control valve V is equipped with a valve housing 30 formed of a metal material or a resin material; a valve body 40 disposed in reciprocating fashion within the valve housing 30; a pressure-sensitive body 50 for urging the valve body 40 towards one direction; and a solenoid 60 connected to the valve housing 30, for exerting electromagnetic driving force on the valve body 40.

The solenoid 60 is equipped with a casing 62 linked to the valve housing 30; a sleeve 63 closed at one end; a stator core 64 of cylindrical shape disposed to the inside of the casing 62 and the sleeve 63; a drive rod 65 furnished in reciprocating fashion to the inside of the stator core 64, and linked at the distal end thereof to the valve body 40, forming a communicating passage 44; a moveable core 66 anchored to the other end side of the drive rod 65; a coil spring 67 for urging the moveable core 66 towards the direction of opening a first valve portion 41; and an excitation coil 68 wound about the outside of the sleeve 63 via a bobbin.

The valve housing 30 is equipped with communicating passages 31, 32, 33 that function as discharge-side passages; communicating passages 33, 34 that function as the communicating passage 44 of the valve body 40 and as intake-side passages; a first valve chamber 35 formed midway along the discharge-side passages; a second valve chamber 36 formed midway along the intake-side passages; a guide passage 37 for guiding the valve body 40; and a third valve chamber 38 formed nearer the control chamber 12 in the discharge-side passages and the intake-side passages. An obstructing member 39 for defining the third valve chamber 38 and constituting part of the valve housing 30 is attached threadably mated to the valve housing 30.

Specifically, the communicating passages 33 and the third valve chamber 38 are formed to constitute parts of both the discharge-side passages and the intake-side passages. The communicating passage 32 creates communication between the first valve chamber 35 and the third valve chamber 38, as well as forming a valve bore passing through the valve body 40 (running through the valve body 40 while ensuring a gap through which fluid can flow). A plurality of the communicating passages 31, 33, 34 are respectively formed in a radial array in the circumferential direction (for example, at four locations spaced apart by 90 degrees).

In the first valve chamber 35, a seating surface 35a for seating the first valve portion 41 of the valve body 40 is formed at the edge portion of the communicating passage 32 (the valve bore), and in the second valve chamber 36, a seating surface 36a for seating a second valve portion 42 of the valve body 40 is formed at the end portion of the stator core 64.

The valve body 40 is formed to substantially cylindrical shape, and is equipped with the first valve portion 41 at a first end side; the second valve portion 42 at the other end side; a third valve portion 43 mounted later and thereby linked to the opposite side from the second valve portion 42, with the first valve portion 41 therebetween; and the communicating passage 44, which penetrates through from the second valve portion 42 to the third valve portion 43 in the axial direction thereof, and functions as an intake-side passage.

The third valve portion 43 is shaped so as to expand in diameter from a constricted diameter state, going from the first valve chamber 35 towards the third valve chamber 38, with a constricted-diameter portion 43a passing through the communicating passage (valve bore) 32. A tapered engagement surface 43c facing an adaptor 53 is formed in an expanded-diameter portion 43b.

The pressure-sensitive body 50 is equipped with a bellows 51 and the adaptor 53. The bellows 51 is secured at one end thereof to the obstructing member 39, and retains the adaptor 53 at the other end (free end) thereof.

The adaptor 53 has a hollow cylindrical-shaped portion, the cross section of which at the distal end which engages the third valve portion 43 being substantially "C" shaped; and is equipped at the distal end of the hollow cylindrical-shaped portion with an annular seating surface 53a facing the tapered engagement surface 43c of the third valve portion 43, for engaging and disengaging therewith.

The pressure-sensitive body 50 is disposed inside the third valve chamber 38, and acts in such a fashion that elongation (expansion) thereof exerts urging force in the direction of opening of the first valve portion 41, as well as contracting in association with increasing pressure in the surrounding area (inside the third valve chamber 38 and the communicating passage 44 of the valve body 40), weakening the urging force exerted on the first valve portion 41.

According to the present invention, in the aforedescribed volume control valve, a recessed portion 70 is formed on the inside surface of the stator core 64 of the solenoid 60, and a friction member 71 for contacting the outside periphery of the drive rod 65 is secured in the recessed portion 70. The purpose of the friction member 71 is to generate friction through contact with the drive rod 65, and impart an appropriate level of braking force with respect to motion of the drive rod 65.

Because the friction member 71 is not intended to seal, there is no pressure differential between the pressure-sensitive body 50 side and the moveable core 66 side of the friction member 71.

### {First Example of Friction Member}

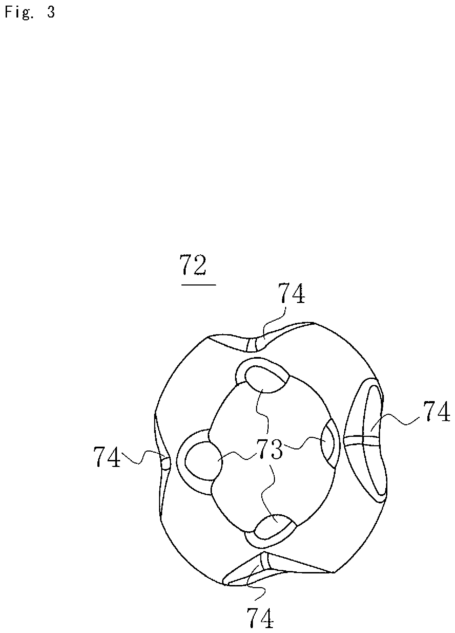

FIG. 3 is a perspective view showing a first example of the friction member installed in the volume control valve according to the first and second embodiment of the present invention.

The friction member 71 is constituted by a ring formed of a rubber material, having a cross sectional shape of generally rectangular shape produced by chamfering of corner portions. A plurality of protrusions 73 equidistributed in the circumferential direction are furnished to the inside diameter side of the rubber ring 72. These protrusions 73 are intended to prevent excessive braking force from acting on the drive rod 65, and while the number and shape thereof are not particularly limited, in preferred practice the shape will be one adapted to reciprocating motion of the drive rod 65. For example, in FIG. 3, four semispherical protrusions are furnished in an equidistributed arrangement. The diameter of the rubber ring 72 is established such that the protrusions will 73 contact the outside peripheral surface of the drive rod 65 at appropriate levels of pressure, and deform thereagainst.

The locations at which the protrusions 73 are furnished on the rubber ring 72 are thin-walled portions 74 from which sections at the outside diameter side have been shaved. These thin-walled portions 74 are intended to prevent excessive braking force from acting on the drive rod 65, even when the rubber ring 72 is swelled by the refrigerant, and have been shaved down to an arcuate shape in side view, so as to smoothly deepen towards the center from either side of the center axis in the diametrical direction of the protrusions 73 at the outside diameter side.

The rubber material forming the rubber ring 72 is not limited to any particular one; suitable materials are nitrile rubber (NBR), hydrogenated nitrile rubber (HNBR), acrylic rubber (ACM), silicone rubber (VMQ), fluorosilicone rubber (FVMQ), fluororubber (FKM), ethylene propylene rubber (EPDM), chloroprene rubber (CR), chlorosulfonated polyethylene (CSM), styrene butadiene rubber (SBR), butyl rubber (IIR), and urethane rubber (AU).

### {Example of Mode for Installation of Rubber Ring}

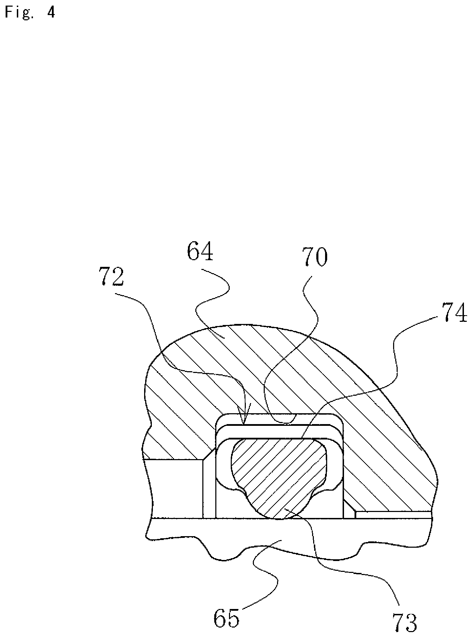

FIG. 4 is a fragmentary sectional view showing an example of a mode for installation of the rubber ring 72, as the friction member shown in FIG. 3.

The recessed portion 70 on the inside surface of the stator core 64 has a cross section of substantially rectangular shape established to have a width such that both side faces of the rubber ring 72 wedge therein, and to have a depth substantially identical to or slightly greater than the thickness of the rubber ring 72 in the diametrical direction. In a case in which the rubber ring 72 has been installed within the recessed portion 70, the inside surfaces of the protrusions 73 contact the outside peripheral surface of the drive rod 65, with the rubber ring 72 supported with both sides thereof, excluding the thin-walled portions 74, wedged within the recessed portion 70 of the stator core 64. Because the rubber ring 72 is supported wedged at both sides thereof in this fashion, deflection thereof in the axial direction is suppressed, and friction is readily imparted to the drive rod 65. Moreover, because the rubber ring 72 constituting the friction member 71 contacts the outside peripheral surface of the drive rod 65 exclusively at the protrusions 73, no pressure differential is generated between the pressure-sensitive body 50 side and the moveable core 66 side of the friction member 71, and situations in which high levels of back pressure build up at the moveable core 66 side can be prevented.

### {Another Example of Mode for Installation of Rubber Ring}

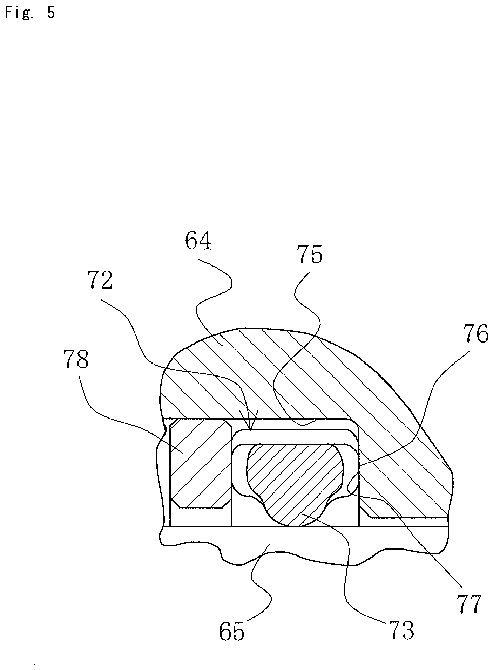

FIG. 5 is a fragmentary sectional view showing another example of a mode for installation of the rubber ring 72, as the friction member shown in FIG. 3.

A recessed portion 75 on the inside surface of the stator core 64 has a receiving surface 77 against which the surface 76 at the back side of the rubber ring 72 can abut, has an open shape at the entrance side, and is established to have a depth substantially identical to or slightly greater than the thickness of the rubber ring 72 in the diametrical direction. A backup ring 78 is installed at the entrance side of the recessed portion 75, wedging the rubber ring 72 between it and the receiving surface 77. In a case in which the rubber ring 72 has been installed within the recessed portion 75, the inside surfaces of the protrusions 73 contact the outside peripheral surface of the drive rod 65, and the rubber ring 72 is supported with both sides thereof, excluding thin-walled portions 83, wedged between the receiving surface 77 of the recessed portion 70 and the backup ring 78. Because the rubber ring 72 is supported wedged at both sides in this fashion, deflection thereof in the axial direction is suppressed, and friction is readily imparted to the drive rod 65. Moreover, the rubber ring 72 is readily installed, due to the open shape at the entrance side of the recessed portion 75. Furthermore, the intensity of wedging of the rubber ring 72 can be adjusted through the backup ring 78.

### {Second Example of Friction Member}

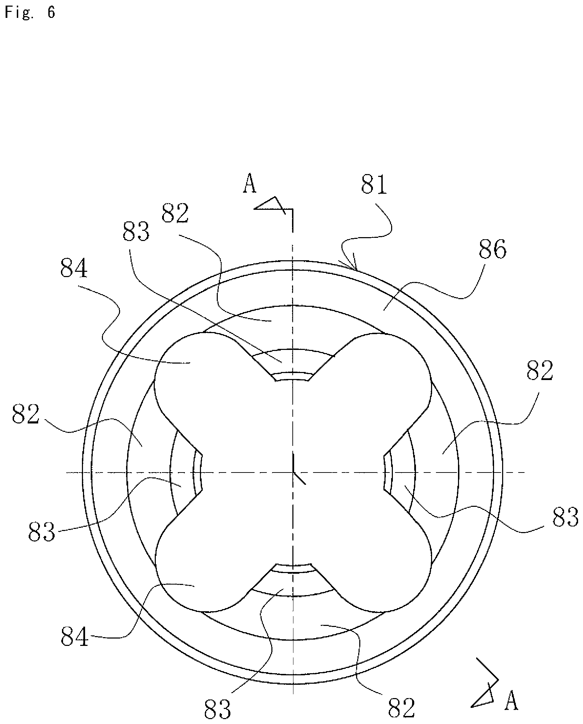

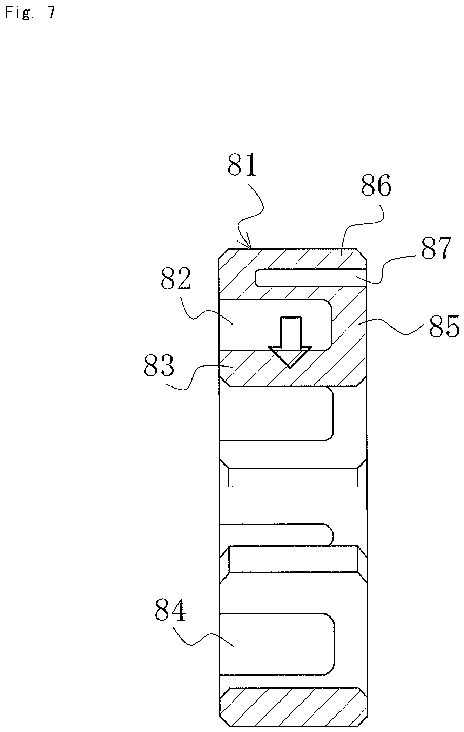

FIG. 6 is a front view showing a second example of the friction member installed in the volume control valve according to the first and second embodiment of the present invention, and FIG. 7 is view of section A-A in FIG. 6.

The friction member is a ring 81 formed from a synthetic resin material, and constituted by a ring having a ring-shaped groove 82 that opens to the side formed in a medial portion between the outside diameter side and the inside diameter side, and having a cross section shape that is substantially "C" shaped (see FIG. 7). In a case in which the synthetic resin ring 81 is subjected to temperature changes, the ring-shaped groove 82 ameliorates dimensional change inwardly in the diametrical direction shown by the arrow in FIG. 7, due to the temperature changes.

As shown in FIG. 6, the synthetic resin ring 81 of a substantially-"C"-shaped cross sectional shape is divided in the circumferential direction by a plurality of notched portions 84 furnished in an equidistributed arrangement in the circumferential direction, into inside diameter-side ring portions 83 that contact the outside peripheral surface of the drive rod 65. The notched portions 84 are intended to prevent the inside diameter-side ring portions 83 from exerting excessive braking force on the drive rod 65, and while there are no particular limitations as to the number and shape thereof, in preferred practice, the shape will be such that the remaining sections of the inside diameter-side ring portions 83 that are not notched are fan-shaped in front view, as shown in FIG. 6 for example. In FIG. 6, the substantially artillery-shell-shaped notched portions 84 extend outward in radial directions from the inside diameter-side ring portions 83 to an outside diameter-side ring portion 86, forming the four inside diameter-side ring portions 83 of fan shape in front view. The diameter of the rubber ring 81 is established such that the inside surfaces of the inside diameter-side ring portions 83 contact the outside peripheral surface of the drive rod 65 at appropriate levels of pressure, and deform thereagainst.

Optionally, an additional ring-shaped groove 87 is formed in the outside diameter-side ring portion 86 of the synthetic resin ring 81, so as to open towards the opposite side from the opening side of the aforementioned circumferential groove 82. By furnishing the ring-shaped groove 87, it is possible to eliminate the effects of dimensional changes by the flange portion 85 when the synthetic resin ring 81 is subjected to temperature changes.

### {Second Embodiment}

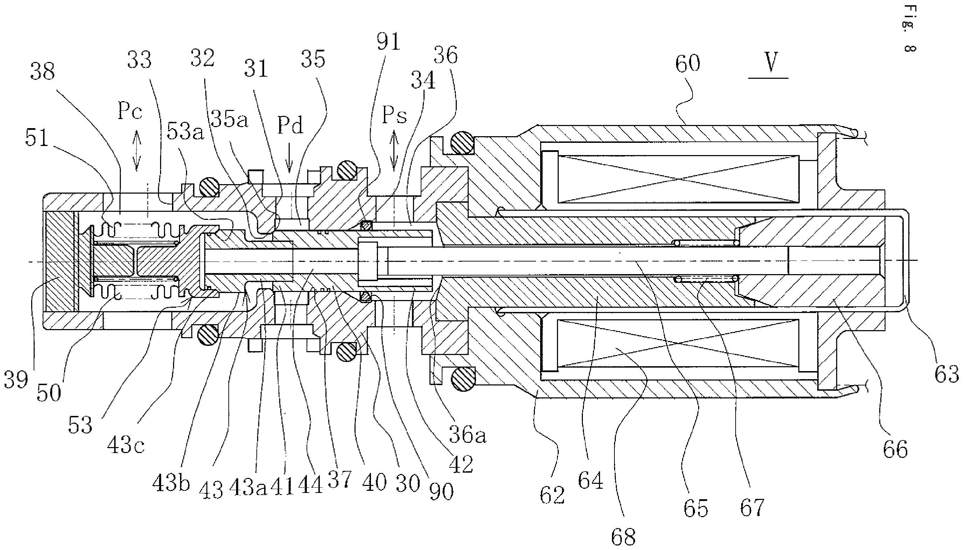

FIG. 8 is a longitudinal sectional view showing the volume control valve according to the second embodiment of the present invention.

In FIG. 8, reference symbols identical to the reference symbols disclosed in FIG. 2 indicate identical parts, and are not described in detail.

In the first embodiment shown in FIG. 2, the reciprocating member that contacts the friction member is the drive rod 65 of the solenoid, and the stationary-side member is the stator core 64, whereas the second embodiment shown in FIG. 8 differs from the case of the first embodiment shown in FIG. 2 in that the reciprocating member that contacts the friction member is the valve body 40, and the stationary-side member is the valve housing 30.

A recessed portion 90 is formed on the inside surface of the valve housing 30, and a friction member 91 for contacting the outside periphery of the valve body 40 is secured in the recessed portion 90. The friction member 91 generates friction through contact with the valve body 40, imparting an appropriate level of braking force with respect to motion of the valve body 40. Because the friction member 91 is not intended to seal, there is no pressure differential between the pressure-sensitive body 50 side and the moveable core 66 side of the friction member 91.

As regards the shape of the friction member 91, either the shape of the rubber ring 71 shown in FIG. 3, or the shape of the synthetic resin ring 81 shown in FIG. 7, would be acceptable.

The mode for installation of the friction member 91 may be the mode for installation shown in either FIG. 4 or FIG. 5.

There shall now be provided a description of the operation of the variable volume compressor M equipped with this volume control valve V, in the case of implementation in the air conditioning system of an automobile.

First, as the rotating shaft 20 is rotated by rotational driving force of the engine through the agency of a transmission belt (not illustrated) and the driven pulley 24, the swash plate 21 rotates in unison with the rotating shaft 20. As the swash plate 21 rotates, the pistons 22 reciprocate inside the cylinders 14 at a stroke according to the incline angle of the swash plate 21, and refrigerant gas taken into the cylinders 14 from the intake chamber 13 is compressed by the pistons 22 and discharged to the discharge chamber 11. The discharged refrigerant gas is then supplied from the condenser 25 to the evaporator 27 via the expansion valve 26, and returns to the intake chamber 13 while the refrigeration cycle takes place.

Here, the discharged amount of the refrigerant gas is determined by the stroke of the pistons 22, and the stroke of the pistons 22 is determined by the incline angle of the swash plate 21, which is controlled by the pressure inside the control chamber 12 (the control chamber pressure Pc).

During compression by the pistons 22, blowby gas constantly flows into the control chamber 12 from the clearance between the pistons 22 and the cylinders 14, so as to boost the pressure Pc of the control chamber 12. However, because the stationary orifice 19 has been furnished, even when the communicating passages (intake-side passages) 33, 44, 34 are closed, a constant amount of pressure is discharged from the control chamber 12 to the intake chamber, and the pressure inside the control chamber 12 can be maintained at the proper level.

In a state of running at maximum discharge, the solenoid 60 (coil 68) is energized to a predetermined current value (I), and the moveable core 66 and the drive rod 65, acting in opposition to the urging force of the pressure-sensitive body 50 and the coil spring 67, move the valve body 40 to a position at which the first valve portion 41 seats onto the seating face 35a, closing the communicating passages (discharge-side passages) 31, 32, and the second valve portion 42 separates from the seating face 36a, opening the communicating passages (intake-side passages) 34, 44.

At times of normal control (the interval between running at maximum volume and running at minimum volume), the magnitude of energization of the solenoid 60 (coil 67) is controlled appropriately to change the electromagnetic driving force (urging force). Specifically, the position of the valve body 40 is adjusted appropriately, controlling the amount of opening of the first valve portion 41 and the amount of opening of the second valve portion 42 so as to obtain the desired discharge amount.

In a state of running at minimum volume, the solenoid 60 (coil 68) is non-energized, the moveable core 66 and the drive rod 65 are backed up and come to a stop at a rest position by the urging force of the coil spring 67, and the valve body 40 moves to a position at which the first valve portion 41 separates from the seating face 35a, opening the communicating passages (discharge-side passages) 31, 32, while the second valve portion 42 seats onto the seating face 36a, closing the communicating passages (intake-side passages) 34, 44. In so doing, the discharged fluid (discharge pressure Pd) is supplied into the control chamber 12 through the communicating passages (discharge-side passages) 31, 32, 33. The swash plate 21 is then controlled to the smallest incline angle, minimizing the stroke of the pistons 22. As a result, the discharged amount of refrigerant gas goes to the minimum.

In the states of running described above, during intervals that the solenoid 60 (coil 67) is energized, the volume control valve V gives rise to minute oscillations due to the PWM control input signal, in particular, a 400-500 Hz input signal. Because of this, at times that the aperture of the communicating passage 32 is small, due to the small relative distance between the seating surface 35a and the valve body 40, the seating surface 35a and the valve body 40 are prone to collide repeatedly innumerable times. However, in the present invention, because the friction member 71, 91 (the rubber ring 72 or the synthetic resin ring 81) has been furnished, braking force due to friction acts on the reciprocating member (the drive rod 65 or the valve body 40) contacting the rubber ring 72 or the synthetic resin ring 81, and therefore repeated collision of the seating surface 35a and the valve body 40 is suppressed, and noise can be reduced. Moreover, change in the aperture generated by collisions of the seating surface 35a and the valve body 40 can be suppressed.

While the embodiments of the present invention have been described hereinabove with reference to the accompanying drawings, the specific constitution is not limited to these embodiments; various modifications and additions made within the scope and spirit of the invention are to be included in the present invention.

For example, whereas the aforedescribed embodiments described examples of a volume control valve for controlling the discharge amount, according to the pressure load, in a variable volume compressor employed in the air conditioning system of an automobile, there is no limitation thereto; a solenoid valve employed in an automotive automatic transmission or the like would be acceptable as well.

Moreover, for example, while the aforedescribed embodiments described a drive rod initially driven by the solenoid, and a valve body integrally linked to the drive rod, as examples of the reciprocating member directly driven through driving by the solenoid, there is no limitation thereto. For example, in a case in which a medial member is linked to the drive rod and the valve body, and employed for transmitting displacement of the drive rod to the valve body, the medial member could be included as a reciprocating member.

With regard to the shape of the friction member, there is no limitation to those shown in FIGS. 3, 6, and 7. For example, a ring of generally circular cross section could be furnished with the protrusions and thin-walled portions shown in FIG. 3, or a ring of generally circular cross section could be furnished with the ring-shaped groove and a plurality of notched portions in the inside diameter ring portions, as shown in FIGS. 6 and 7.

### {REFERENCE SIGNS LIST}

- 10: Casing
- 11: Discharge chamber
- 12: Control chamber (crank chamber)
- 13: Intake chamber
- 14: Cylinder
- 15: Communicating passage
- 16: Communicating passage
- 17: Communicating passage
- 18: Communicating passage
- 19: Securing orifice
- 20: Rotating shaft
- 21: Swash plate
- 22: Piston
- 23: Linking member
- 24: Driven pulley
- 25: Condenser
- 26: Expansion valve
- 27: Evaporator
- 30: Valve housing
- 31, 32: Communicating passage (discharge-side passage)
- 32: Communicating passage (valve bore)
- 33: Communicating passage (control chamber-side passage)
- 34: Communicating passage (intake-side passage)
- 35: First valve chamber
- 35a: Seating surface
- 36: Second valve chamber
- 36a: Seating surface
- 37: Guide passage
- 38: Third valve chamber
- 39: Obstructing member
- 40: Valve body
- 41: First valve portion
- 42: Second valve portion
- 43: Third valve portion
- 43a: Constricted-diameter portion of third valve portion
- 43b: Expanded-diameter portion of third valve portion
- 43c: Engagement surface of third valve portion
- 44: Communicating passage
- 50: Pressure-sensitive body
- 51: Bellows
- 53: Adapter
- 53a: Seating surface
- 60: Solenoid
- 62: Casing
- 63: Sleeve
- 64: Stator core
- 65: Drive rod
- 66: Moveable core
- 67: Coil spring
- 68: Excitation coil
- 70: Recessed portion on inside surface of stator core
- 71: Friction member
- 72: Rubber ring
- 73: Protrusions
- 74: Thin-walled portions
- 75: Recessed portion on inside surface of stator core
- 76: Surface at back side of rubber ring
- 77: Receiving surface of recessed portion
- 78: Backup ring
- 81: Synthetic resin ring
- 82: Ring-shaped groove
- 83: Inside diameter-side ring portion
- 84: Notched portion
- 85: Flange portion
- 86: Outside diameter-side ring portion
- 87: Ring-shaped groove
- 90: Recessed portion on inside surface of valve housing
- 91: Friction member
- M: Swage plate type variable volume compressor
- V: Volume control valve
- Pd: Discharge pressure
- Ps: Intake pressure
- Pc: Control chamber pressure

## Claims

1. A solenoid valve (V) for varying the aperture of a passage between a valve seat and a valve body (40) by a PWM-controlled solenoid (60), and varying the volume or pressure of a working fluid, wherein a friction member (71) for contacting the outside periphery of a reciprocating member (65) directly driven through driving by said solenoid (60) is furnished to a stationary-side member (64, 30) in an area surrounding said reciprocating member (65), **characterized in that** said friction member (71) is constituted by a rubber ring (72) formed from a rubber material and furnished with a plurality of protrusions (73) on the inside diameter side of said rubber ring (72) in the circumferential direction, said rubber ring (72) contacting the outside periphery of said reciprocating member (65) exclusively at the protrusions (73), or **in that** said friction member (71) is constituted by a synthetic resin ring (81) formed from a synthetic resin material, wherein said synthetic resin ring (81) being substantially "C" shaped in cross-section, and furnished with inside diameter-side ring portions (83) and a plurality of notched portions (84) on the inside diameter side of the synthetic resin ring (81) in the circumferential direction, the synthetic resin ring (81) contacting the outside periphery of said reciprocating member (65) at the inside diameter-side ring portions (83).

2. The solenoid valve (V) according to claim 1, **characterized in that** the reciprocating member (65) directly driven through driving by said solenoid (60) and disposed contacting the friction member (71) is a drive rod (65) of the solenoid (60); and said stationary-side member (64, 30) is a stator core (64).

3. The solenoid valve (V) according to claim 1, **characterized in that** the reciprocating member (65) directly driven through driving by said solenoid (60), and disposed contacting the friction member (71), is a valve body (40); and said stationary-side member (64, 30) is a valve housing (30).

4. The solenoid valve (V) according to claim 1, **characterized in that** locations where said protrusions (73) are furnished on said rubber ring (72) are thin-walled portions (74) from which sections at the outside diameter side have been shaved.

5. The solenoid valve (V) according to claim 1, **characterized in that** a ring-shaped groove (82, 87) opening towards a side opposite said substantially "C" shaped opening side is formed in an outside-diameter-side ring portion of the friction member (71) constituted by said synthetic resin ring (81) of substantially "C" shaped cross section.

6. The solenoid valve (V) according to claim 4 or 5, **characterized in that** said friction member (71) is secured with both side surfaces thereof wedged into a recessed portion formed (70) on the inside surface of said stationary-side member (64, 30).

7. The solenoid valve (V) according to claim 4 or 5, **characterized in that** a backup ring (78) is furnished at one side of a recessed portion formed on the inside surface of said stationary-side member (64, 30), and said friction member (71) is secured by being pressed against the other side of the recessed portion by said backup ring (78).

## Patentansprüche

1. Magnetventil (V) zum Variieren der Öffnung eines Durchlasses zwischen einem Ventilsitz und einem Ventilkörper (40) durch einen PWM-gesteuerten Magneten (60), und zum Variieren des Volumens oder des Drucks eines Arbeitsfluids, wobei ein Reibelement (71) zum Kontaktieren der äußeren Peripherie eines sich hin- und herbewegenden Elements (65), welches direkt durch den Antrieb des Magneten (60) angetrieben wird, mit einem stationärseitigen Element (64, 30) in einem das sich hin- und herbewegende Element (65) umgebenden Bereich ausgestattet ist, **dadurch gekennzeichnet, dass** das Reibelement (71) durch einen Gummiring (72) gebildet ist, welcher aus einem Gummimaterial gebildet ist und mit einer Mehrzahl von Vorsprüngen (73) auf der inneren Umfangsseite des Gummirings (72) in Umfangsrichtung ausgestattet ist, wobei der Gummiring (72) die äußere Peripherie des sich hin- und herbewegenden Elements (65) ausschließlich an den Vorsprüngen (73) kontaktiert, oder dass das Reibelement (71) durch einen synthetischen Harzring (81) gebildet ist, welcher aus einem synthetischen Harzmaterial gebildet ist, wobei der synthetische Harzring (81) im Wesentlichen C-förmig im Querschnitt ist, und mit inneren durchmesserseitigen Ringabschnitten (83) und einer Mehrzahl von Kerbabschnitten (84) auf der inneren Durchmesserseite des synthetischen Harzrings (81) in Umfangsrichtung ausgestattet ist, wobei der synthetische Harzring (81) die äußere Peripherie des sich hin- und herbewegenden Elements (65) an den inneren durchmesserseitigen Ringabschnitten (83) kontaktiert.

2. Magnetventil (V) nach Anspruch 1,
**dadurch gekennzeichnet, dass** das sich hin- und herbewegende Element (65), welches direkt durch den Antrieb des Magneten (60) angetrieben wird und so angeordnet ist, dass es das Reibelement (71) kontaktiert, eine Antriebsstange (65) des Magneten (60) ist, und das stationärseitige Element (64, 30) ein Statorkern (64) ist.

3. Magnetventil (V) nach Anspruch 1,
**dadurch gekennzeichnet, dass** das sich hin- und herbewegende Element (65), welches direkt durch den Antrieb des Magneten (60) angetrieben wird und so angeordnet ist, dass es das Reibelement (71) kontaktiert, ein Ventilkörper (40) ist, und das stationärseitige Element (64, 30) ein Ventilgehäuse (30) ist.

4. Magnetventil (V) nach Anspruch 1,
**dadurch gekennzeichnet, dass** Stellen, an welchen der Gummiring (72) mit den Vorsprüngen (73) ausgestattet ist, dünnwandige Abschnitte (74) sind, von welchen Abschnitte an der äußeren Durchmesserseite abgetrennt wurden.

5. Magnetventil (V) nach Anspruch 1,
**dadurch gekennzeichnet, dass** eine ringförmige Nut (82, 87), welche sich zu einer Seite hin öffnet, welche der im Wesentlichen "C"-förmigen Öffnungsseite gegenüberliegt, in einem äußeren durchmesserseitigen Ringabschnitt des Reibelements (71) gebildet wird, welches durch den synthetischen Harzring (81) mit im Wesentlichen "C"-förmigem Querschnitt gebildet ist.

6. Magnetventil (V) nach Anspruch 4 oder 5,
**dadurch gekennzeichnet, dass** das Reibelement (71) mit beiden Seitenflächen in einem Aussparungsabschnitt (70) verkeilt gesichert ist, welcher auf der Innenfläche des stationärseitigen Elements (64, 30) gebildet ist.

7. Magnetventil (V) nach Anspruch 4 oder 5,
**dadurch gekennzeichnet, dass** ein Stützring (78) an einer Seite eines Aussparungsabschnitts vorgesehen ist, welcher auf der Innenfläche des stationärseitigen Elements (64, 30) gebildet ist, und das Reibelement (71) dadurch gesichert ist, dass es gegen die andere Seite des Aussparungsabschnitts durch den Stützring (78) gedrückt wird.

## Revendications

1. Soupape à solénoïde (V) pour faire varier l'ouverture d'un passage entre un siège de soupape et un corps de soupape (40) au moyen d'un solénoïde (60) commandé par PWM, et faire varier le volume ou la pression d'un fluide moteur, dans laquelle un organe de friction (71) destiné à entrer en contact avec la périphérie extérieure d'un organe à mouvement de va-et-vient (65) entraîné directement par ledit solénoïde (60) est prévu sur un organe côté fixe (64, 30) dans une zone entourant ledit organe à mouvement de va-et-vient (65), **caractérisé en ce que** ledit organe de friction (71) est constitué d'une bague de caoutchouc (72) formée d'un matériau de caoutchouc et doté d'une pluralité de saillies (73) sur le côté diamètre intérieur de ladite bague en caoutchouc (72) dans la direction circonférentielle, ladite bague en caoutchouc (72) entrant en contact avec la périphérie extérieure dudit organe à mouvement de va-et-vient (65) exclusivement au niveau des saillies (73), ou **en ce que** ledit organe de friction (71) est constitué par une bague en résine synthétique (81) formée d'un matériau de résine synthétique, la bague en résine synthétique (81) ayant une section droite essentiellement en forme de "C", et étant pourvue de parties annulaires côté diamètre intérieur (83) et d'une pluralité de parties entaillées (84) sur le côté diamètre intérieur de la bague en résine synthétique (81) dans la direction circonférentielle, la bague en résine synthétique (81) entrant en contact avec la périphérie extérieure dudit organe à mouvement de va-et-vient (65) au niveau des parties annulaires côté diamètre intérieur (83).

2. Soupape à solénoïde (V) selon la revendication 1, **caractérisé en ce que** l'organe à mouvement de va-et-vient (65) entraîné directement par ledit solénoïde (60) et placé en contact avec l'organe de friction (71) est une biellette d'entraînement (65) du solénoïde (60) ; et ledit organe côté fixe (64, 30) est un noyau de stator (64).

3. Soupape à solénoïde (V) selon la revendication 1, **caractérisé en ce que** l'organe à mouvement de va-et-vient (65) entraîné directement par ledit solénoïde (60) et placé en contact avec l'organe de friction (71) est un corps de soupape (40) ; et ledit organe côté fixe (64, 30) est un compartiment de soupape (30).

4. Soupape à solénoïde (V) selon la revendication 1, **caractérisé en ce que** les emplacements au niveau desquels lesdites saillies (73) sont prévues sur ladite bague en caoutchouc (72) sont des parties à paroi mince (74) depuis lesquelles des sections ont été rabotées sur le côté diamètre extérieur.

5. Soupape à solénoïde (V) selon la revendication 1, **caractérisée en ce qu'**une rainure de forme annulaire (82, 87) s'ouvrant sur un côté opposé au côté de ladite ouverture essentiellement en forme de "C" est formée dans une partie annulaire côté diamètre extérieur de l'organe de friction (71) constitué par ladite bague en résine synthétique (81) à section droite essentiellement en forme de "C".

6. Soupape à solénoïde (V) selon la revendication 4 ou 5, **caractérisée en ce que** ledit organe de friction (71) est fixé avec ses deux surfaces latérales coincées dans une partie évidée (70) formée sur la surface interne dudit organe côté fixe (64, 30).

7. Soupape à solénoïde (V) selon la revendication 4 ou 5, **caractérisée en ce qu'**une bague d'appui (78) est prévue sur un côté d'une partie évidée formée dans la surface interne dudit organe côté fixe (64, 30), et ledit organe de friction (71) est fixé en étant pressé contre l'autre côté de la partie évidée par ladite bague d'appui (78).
